Europäisches Patentamt

European Patent Office

Office européen des brevets

(19)

(11) Veröffentlichungsnummer : **0 122 527**
**B1**

(12)

# EUROPÄISCHE PATENTSCHRIFT

(45) Veröffentlichungstag der Patentschrift :
30.11.88

(21) Anmeldenummer : 84103523.1

(22) Anmeldetag : 30.03.84

(51) Int. Cl.⁴ : **B 62 D 13/02**

(54) **Anhängefahrzeug.**

(30) Priorität : 08.04.83 DE 3312651

(43) Veröffentlichungstag der Anmeldung :
24.10.84 Patentblatt 84/43

(45) Bekanntmachung des Hinweises auf die Patenterteilung : 30.11.88 Patentblatt 88/48

(84) Benannte Vertragsstaaten :
**AT BE CH DE FR GB LI NL SE**

(56) Entgegenhaltungen :
**DE-A- 3 008 787**
**DE-A- 3 139 344**
**DE-A- 3 235 546**
**DE-C-   236 637**
**DE-C-   249 659**
**DE-U- 7 708 186**
**GB-A- 2 017 025**
**NL-C-    74 209**

(73) Patentinhaber : **Maschinenfabriken Bernard Krone**
**GmbH**
**Heinrich-Krone-Strasse 10**
**D-4441 Spelle (DE)**

(72) Erfinder : **Evers, Heinz**
**Nösterberg 2**
**D-4472 Haren/Tinnen (DE)**
Erfinder : **Krone, Bernard**
**Bernard-Krone-Strasse**
**D-4441 Spelle (DE)**

(74) Vertreter : **Busse & Busse Patentanwälte**
**Postfach 1226 Grosshandelsring 6**
**D-4500 Osnabrück (DE)**

## Beschreibung

Die Erfindung bezieht sich auf ein Anhängefahrzeug, insbesondere für Lastkraftwagen, gemäß dem Oberbegriff des Anspruchs 1.

Bei einem bekannten Anhängefahrzeug dieser Art, wie es z. B. aus dem DE-GM 77 08 186 bekannt ist oder Gegenstand der älteren deutschen Patentanmeldungen P 32 35 576.7 oder P 33 05 389.9 bildet, ist die Zug- und Lenkdeichsel längsverschieblich in Führungen des Drehgestells bzw. des mit dem Drehgestell verbundenen Teils des Drehkranzes geführt, und es ist ein Getriebe vorgesehen, das in Abhängigkeit von Lenkbewegungen der Zug- und Lenkdeichsel die wirksame Deichsellänge verändert. Die Deichselhochachse fällt mit der Drehkranzhochachse zusammen, und die Schwenkbewegungen des Drehgestells entsprechen in ihrem Ausschlagwinkel dem der Zug- und Lenkdeichsel. In der Geradeausfahrtstellung des Drehgestells, in der die Zug- und Lenkdeichsel fahrtrichtungsparallel und die vordere Radachse senkrecht zur Fahrtrichtung ausgerichtet sind, hat die Zug- und Lenkdeichsel ihre geringstmögliche wirksame Deichsellänge, d. h. der Abstand zwischen der Deichselzugöse und der Drehkranzhochachse ist am geringsten und dabei so gering, daß der Abstand zwischen dem vorderen Querrand des Aufbaus des Anhängefahrzeuges und dem rückwärtigen Querrand des Aufbaus des Zugfahrzeuges nur zum Beispiel 70 bis 80 cm beträgt. Eine solche Kurzdeichselanhängung ermöglicht es, bei vorgegebener Gesamtlänge eines Lastzuges von 18 m die Länge der Ladefläche des Anhängefahrzeugs gegenüber herkömmlichen Anhängefahrzeugen zu vergrößern, bei denen der Abstand zwischen den Aufbauten von Zug- und Anhängefahrzeug etwa 150 bis 170 cm beträgt, um bei Zug- und Lenkdeichseln unveränderlicher wirksamer Deichsellänge in Kurvenfahrten ein Berühren der Fahrzeugaufbauten in den Eckpunkten zu vermeiden. Solche Berührungen werden bei Anhängefahrzeugen der eingangs genannten Art in Kurvenfahrten dadurch vermieden, daß das Getriebe bei Lenkausschlägen der Zug- und Lenkdeichsel aus der fahrtrichtungsparallelen Mittellage die wirksame Deichsellänge auf ein Maß vergrößert, das Aufbauberührungen in den Eckpunkten der Aufbauten ausschließt.

Das bei der eingangs genannten Art von Anhängefahrzeugen für eine Kurzdeichselanhängung verwirklichte Prinzip der Längsverschiebung der Zug- und Lenkdeichsel in Abhängigkeit von Lenkbewegungen der Deichsel hat neben dem Laderaumgewinn den Vorteil, daß lediglich das Anhängefahrzeug besonderer konstruktiver Vorkehrungen bedarf und als Zugfahrzeug jeder herkömmliche Lastkraftwagen Verwendung finden kann. Zur Bildung eines Lastzuges genügt ein einfaches Ankuppeln der Zug- und Lenkdeichsel des Anhängefahrzeugs. Dies ist besonders bedeutungsvoll, weil dadurch beliebige Kombinationen von Zug- und Anhängefahrzeugen zu Lastzügen möglich sind. Anhängefahrzeuge der eingangs genannten Art zeigen auch ein gutes Fahrverhalten im Zugbetrieb, erfordern jedoch einen recht erheblichen konstruktiven, die Gestehungskosten erhöhenden Bauaufwand, während ferner die Führungen für die längsverschiebliche Zug- und Lenkdeichsel und die Teile des die Längsverschiebung steuernden Getriebes der regelmäßigen Pflege und Wartung bedürfen, um Verschleißerscheinungen entgegenzuwirken.

Zur Lösung des Problems der Kurzdeichselanhängung zum Zwecke der Laderaumvergrößerung und des damit einhergehenden Problems der Vermeidung von Aufbauberührungen in Kurvenfahrten wurden auch andere Wege beschritten. So ist z. B. aus der europäischen Patentanmeldung 0 066 269 eine Konstruktion eines Anhängefahrzeugs bekannt, bei der das Anhängefahrzeug für dessen Vorderachse ein Drehgestell mit einem ersten Drehring aufweist, dem im Vorderachsbereich ein zweiter Drehring zugeordnet ist, an dem zum Zwecke der Abstandsverringerung zwischen dem Zugfahrzeug und dem Anhängefahrzeug eine verkürzte Zugdeichsel angreift. Diese stellt eine reine Zugverbindung zum Zugfahrzeug her, und am Heck des Zugfahrzeugs ist weiterhin seitensteif ein Lenker gelagert, der in einer zur Zugdeichsel etwa parallelen Ebene zum Vorderachsbereich des Anhängefahrzeugs führt und dort über ein Schwenklager mit dem Drehgestell der Vorderachse verbunden ist. Eine derartige Ausführung mit einer reinen Zugdeichsel und zusätzlich mit einem Lenker löst das Problem von Aufbauberührungen in Kurvenfahrten dadurch, daß in Kurven das Anhängefahrzeug im Bereich seines vorderen Endes eine seitliche Verlagerung zum rückwärtigen Aufbauende des Zugfahrzeugs erhält, durch die die kurveninnere vordere Ecke des Aufbau des Anhängefahrzeugs zur Mitte des Aufbaus des Zugfahrzeugs hin versetzt wird.

Eine derartige Konstruktion erfordert ebenfalls einen hohen Bauaufwand für das Anhängefahrzeug, zusätzlich dazu jedoch auch noch eine besondere Kupplung am Zugfahrzeug für den Anbau des Lenkers. Abgesehen von erhöhtem Bedienungsaufwand beim An- und Abkuppeln eines Anhängefahrzeugs kann bei einer derartigen Konstruktion ein Lastzug nur mit einem Spezialzugfahrzeug gebildet werden, was im Interesse einer möglichst hohen Variabilität unerwünscht ist. Auch Rangierfahrzeuge, mit deren Hilfe bei größeren Fuhrunternehmen Anhängefahrzeuge unabhängig von Zugfahrzeugen für den Lasttransport rangiert werden, bedürften entsprechende konstruktive Vorkehrungen für das Anhängen derartiger Anhängefahrzeuge.

Neben der vorbeschriebenen Ausführung, bei der die Zugdeichsel-Hochachse mit der Drehkranzhochachse zusammenfällt und die Lenkdeichsel ein seitensteif am Zugfahrzeug angelenktes und zudem teleskopisch längenveränderliches Bauteil bildet, ist ferner eine Konstruktion bekannt (DE-GM 82 04 799), bei der die Deichselhochachse wiederum mit der Drehkranzhochachse zusammenfällt, die Deichsel als Zug- und Lenkdeichsel ausgebildet ist, mit ihrem rückwärtigen Teil am Drehgestell des Anhängefahrzeugs angreift und mit ihrem vorderen Ende an ein Zugfahrzeug ankuppelbar ist. Dabei besteht die Zug- und Lenkdeichsel jedoch aus zwei Teilen, die über eine Gelenkverbindung mit vertikaler Gelenkachse zwischem dem Ende des Aufbaus des Zugfahrzeugs und dem Drehgestell des Anhängefahrzeugs verbunden sind. Der vordere Teil der Zug- und Lenkdeichsel muß am Zugfahrzeug seitensteif festgelegt werden mit der Folge, daß die gegenüber der Kupplung des Zugfahrzeugs rückwärts verlegt angeordnete Gelenkverbindung zwischen den beiden Deichselteilen die Funktion des Kupplungsgelenkes bei herkömmlichen Fahrzeugen übernimmt. Dadurch wird in Kurvenfahrten eines Lastzuges dem Drehgestell eine Lenkbewegung erteilt, deren Ausschlag im Vergleich mit einer herkömmlichen Konstruktion eine Übersetzung erfährt. Hierdurch erfährt bei Kurvenfahrten eines Lastzuges das vordere Ende des Aufbaus des Anhängefahrzeugs eine seitliche Verschiebung zum Aufbauende des Zugfahrzeugs in der Weise, daß die kurveninnere vordere Aufbauecke des Anhängefahrzeugs zur Mitte des Aufbauendes des Zugfahrzeugs hin versetzt ist. Auch bei dieser Konstruktion bedarf es besonderer konstruktiver Vorkehrungen am Zugfahrzeug, so daß das Anhängefahrzeug nur mit einem Spezialzugfahrzeug kuppelbar ist. Die Übersetzung der Lenkausschläge des Drehgestells führt hinsichtlich des Fahrverhaltens des Anhängefahrzeugs zu einem in Querrichtung unruhigeren Lauf, und zur Herabsetzung unerwünschter Erscheinungen dieser Art ist es notwendig, der Radachse einen erheblichen Nachlauf von z. B. 60 bis 70 cm zu geben. Ein solcher Nachlauf verringert aber die Kippsicherheit des Anhängefahrzeugs bei Einschlägen des Drehgestells, weshalb es unter Herabsetzung der Rangierfähigkeit notwendig ist, den Ausschlag des Drehgestells aus seiner Geradeausfahrtstellung zu begrenzen.

Aus der DE-PS 174 865 ist schließlich ein Anhängefahrzeug mit den im Oberbegriff des Hauptanspruchs angegebenen Merkmalen bekannt. Dieses Anhängefahrzeug ist mit einer Kupplungs- und Lenkvorrichtung versehen, bei der das Untersetzungsgetriebe insgesamt sicherstellen soll, daß das Anhängefahrzeug selbst und jedes weitere Anhängefahrzeug der Radspur des Zugfahrzeuges mit einem gleichen Kurvenradius folgt. Hierzu ist die Zugdeichsel einerseits am Anhängefahrzeug angelenkt und andererseits in einem mit dem Drehkranz verbundenen, eine Führungskulisse aufweisenden Fortsatz geführt, wobei bei einer Lenkbewegung der Abstand zwischen dem Kupplungspunkt der Zugdeichsel und der Hochachse des Drehkranzes in Abhängigkeit vom Lenkausschlag der Zugdeichsel verändert wird. Aufgrund dieser Ausbildung des Anhängefahrzeugs ist dieses für eine im vorhergehenden beschriebene Kurzdeichselanhängung des Anhängers an einen Lastkraftwagen zwecks Optimierung des Ladevolumens nicht geeignet, da im Falle einer Kurzdeichselanhängung Aufbauberührungen unvermeidlich sind.

Der Erfindung liegt die Aufgabe zugrunde, ein Anhängefahrzeug der im Oberbegriff des Anspruchs 1 genannten Art zu schaffen, das bei einfacher Anhängung an die normale Kupplung herkömmlicher Zugfahrzeuge Aufbauberührungen in Kurvenfahrten trotz zur Laderaumvergrößerung besonders kurzer Anhängung vermeidet und mit einem Mindestmaß an konstruktivem Aufwand ein besonders günstiges Fahr- und Rangierverhalten sowie einen annähernd konstanten Abstand zwischen dem Kupplungspunkt der Zug- und Lenkdeichsel und der Drehkranzhochachse verwirklicht.

Die Erfindung löst die Aufgabe mit den Merkmalen des kennzeichnenden Teils des Anspruchs 1. Hinsichtlich weiterer Ausgestaltungen der Erfindung wird auf die Ansprüche 2 bis 5 verwiesen.

Bei dem erfindungsgemäßen Anhängefahrzeug mit der durch das Untersetzungsgetriebe herbeigeführten Umwandlung von Lenkbewegungen der Zug- und Lenkdeichsel in proportional untersetzte Schwenkbewegungen des Drehgestells werden nach dem Prinzip der seitlichen Aufbauverlagerung in Kurvenfahrten Aufbauberührungen auch bei sehr geringen Abständen von nur 60 bis 80 cm zwischen den Aufbauten des Zug- und des Anhängefahrzeugs wirksam vermieden, wobei infolge dieser Untersetzung nicht nur die an der Zugöse der Deichsel aufzubringenden Lenkkräfte herabgesetzt sind und die Rangierfähigkeit außerordentlich günstig ist, sondern auch ein ruhiger Lauf bei verbesserter Spurfolge und dementsprechend besonders guter Kurvenläufigkeit erzielt ist. Dabei ist das Anhängefahrzeug hinsichtlich des Lenkausschlages des Drehgestells nicht beschränkt, da kein besonderer Nachlauf zwischen Drehkranzhochachse und Radachse vonnöten ist. Die Zug- und Lenkdeichsel kann als Gabel oder auch als einfacher Rohrholm ausgebildet sein und ermöglicht sämtliche Relativbewegungen, wie sie im Zugbetrieb auftreten. Der Abstand zwischen dem Kupplungspunkt der Zug- und Lenkdeichsel und der Drehkranzhochachse ist bei dem erfindungsgemäßen Anhängefahrzeug nahezu konstant, so daß pflege- und wartungsintensive Bauteile, die zudem einem erhöhten Verschleiß ausgesetzt sind, in vorteilhafter Weise nicht vorhanden sind.

Ein Ausführungsbeispiel des Gegenstands der Erfindung ist in der Zeichnung näher veranschaulicht. In der Zeichnung zeigen:

Fig. 1 in einer schematischen Draufsicht den abgebrochenen vorderen Bereich eines Anhängefahrzeugs nach der Erfindung in Ankupplung an den abgebrochenen rückwärtigen Bereich eines Zugfahrzeugs bei Geradeausfahrt,

Fig. 2 eine Draufsicht ähnlich Fig. 1 zur Veranschaulichung von Zug- und Anhängefahrzeug bei Kurvenfahrt,

Fig. 3 eine vergrößerte Draufsicht auf den vorderen Bereich eines Anhängefahrzeugs nach der Erfindung in Geradeausfahrtstellung der Teile,

Fig. 4 einen Schnitt nach der Linie IV-IV in Fig. 3,

Fig. 5 eine Draufsicht ähnlich Fig. 3 zur Veranschaulichung der Teile in Kurvenfahrtstellung, und

Fig. 6 einen Schnitt nach der Linie VI-VI in Fig. 5.

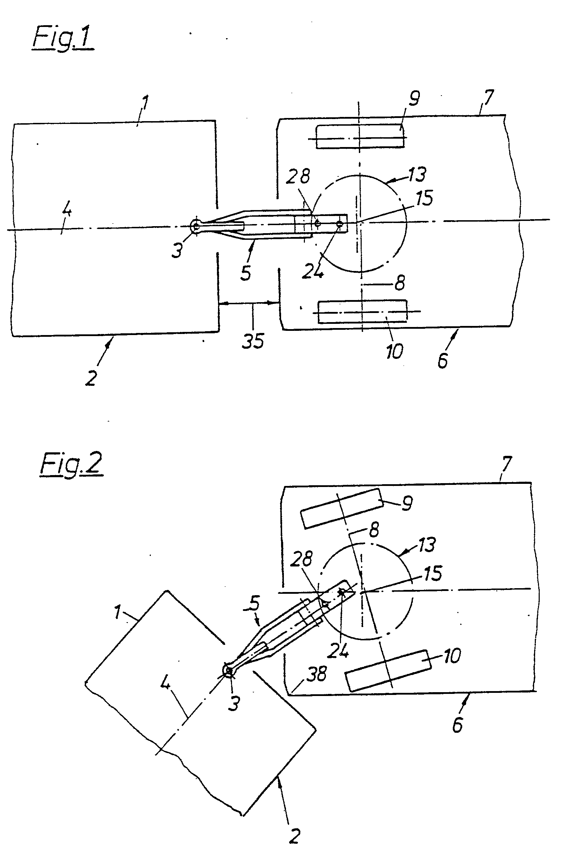

Die Fig. 1 zeigt in schematischer, abgebrochener Darstellung das rückwärtige Ende des Aufbaus 1 eines Lastkraftwagens als Zugfahrzeug 2, an dem in einem von einer herkömmlichen Anhängekupplung gebildeten Anhängepunkt 3, der in der vertikalen Längsmittelachse 4 des Zugfahrzeugs 2 gelegen ist, die Zug- und Lenkdeichsel 5 eines Anhängefahrzeugs 6 angreift. Das lediglich mit dem vorderen Teil seines Aufbaus 7 veranschaulichte Anhängefahrzeug 6 ist zumindest als zweiachsiges Fahrzeug ausgebildet und besitzt eine vordere Radachse 8 mit Laufrädern 9, 10.

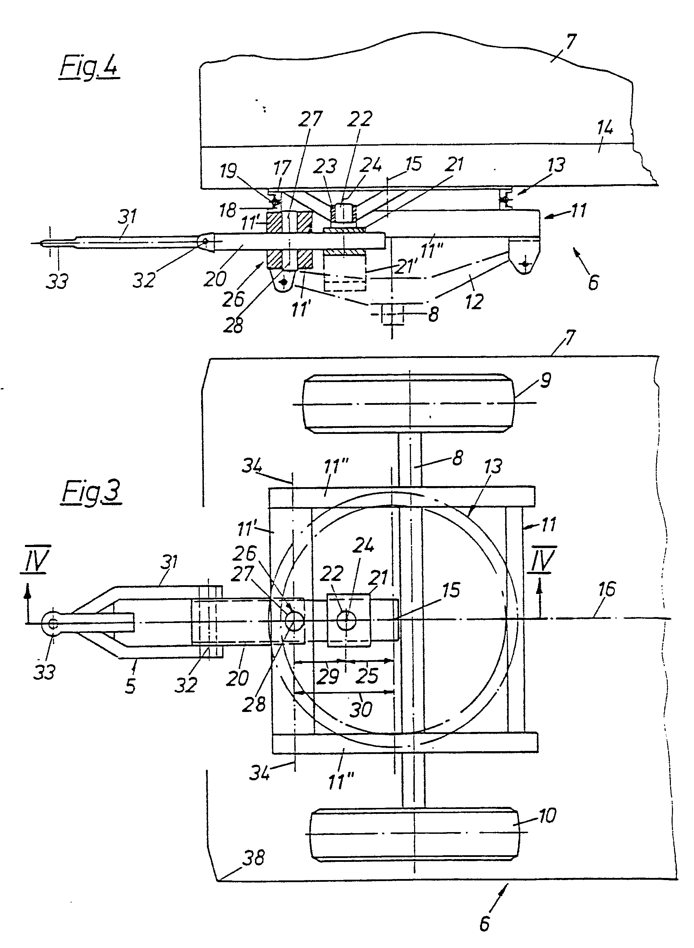

Wie sich den Fig. 3 und 4 näher entnehmen läßt, stützt sich die Radachse 8 an einem Drehgestell 11 ab, z. B. über Federpakete 12 od. dgl.

Das Drehgestell 11 ist mittels eines Drehkranzes 13 an der Unterseite eines Chassis 14 um eine Drehkranzhochachse 15 schwenkbar gelagert, die ortsfest in der vertikalen Längsmittelebene 16 des Chassis angeordnet ist. Der Drehkranz umfaßt wie an sich bekannt einen oberen Ring 17, der mit dem Chassis fest verbunden ist, und einen unteren Ring 18, der mit dem Drehgestell fest verbunden und gegenüber dem oberen Ring 17 durch Wälzlagerelemente 19 abgestützt ist.

Bei dem dargestellten bevorzugten Ausführungsbeispiel bildet die Zug- und Lenkdeichsel 5 einen Untersetzungsgetriebehebel, dessen Teil 20 im Bereich seines rückwärtigen Endes in einem Widerlagerstück 21 längsverschieblich abgestützt und geführt ist. Das Widerlagerstück 21 umfaßt an seiner Oberseite einen vertikalen Schwenkzapfen 22, der drehbar in einer mit dem Chassis 14 fest verbundenen Lagerschale 23 aufgenommen und in dieser axial festgelegt ist. Die Teile 22, 23 definieren eine Deichselhochachse 24, die ortsfest in der vertikalen Längsmittelebene 16 des Anhängefahrzeugs 6 angeordnet ist. Die Deichselhochachse 24 liegt dabei in einem Abstand 25 vor der Drehkranzhochachse 15. Der Teil 20 der Zug- und Lenkdeichsel 5 greift ferner am Drehgestell 11 mittels einer Gelenkverbindung 26 an, die einen mit dem Teil 20 der Zug- und Lenkdeichsel 5 fest verbundenen (nach oben und nach unten vorstehenden) vertikalen Gelenkbolzen 27 umfaßt, der in vertikalen Lagern in zwei im Abstand übereinander angeordneten Querholmen 11' im vorderen Bereich des Drehgestells 11 drehbar gelagert sind. Die Gelenkverbindung 26 bietet dementsprechend eine vertikale Gelenkachse 28 dar, die in der in Fig. 3 veranschaulichten Geradeausfahrtstellung des Drehgestells 11 mit der Längsmittelebene 16 des Chassis 14 zusammenfällt und in einem Abstand 29 in Fahrtrichtung vor der Deichselhochachse 24 und in einem Abstand 30 vor der Drehkranzhochachse 15 gelegen ist.

Bei dem dargestellten Beispiel umfaßt die Zug- und Lenkdeichsel 5 einen vorderen Teil 31, der ebenfalls Bestandteil des Untersetzungsgetriebehebels bildet und um eine horizontale Gelenkachse 32 mit dem Teil 20 schwenkbar verbunden ist. Dieser vordere Teil 31 trägt an seinem Vorderende eine Zugöse 33, die zu Anpassungszwecken im vorderen Teil 31 in und entgegen Fahrtrichtung verstellbar abgestützt sein kann.

Anstelle einer solchen zweiteiligen Ausführung der Zug- und Lenkdeichsel 5 mit horizontaler Gelenkachse 32 für den Ausgleich von Nickbewegungen kann die Zug- und Lenkdeichsel 5 auch über ihre gesamte Länge ein in sich starres Bauteil bilden, in welchem Falle die Gelenkverbindung 26 mit dem Drehgestell 11 als Kreuzgelenk ausgebildet ist. Zur Bildung eines solchen Kreuzgelenkes können z. B. die vorderen Querholme 11' des Drehgestells 11 endseitig untereinander verbunden und mittels fluchtender horizontaler Gelenkzapfen um eine horizontale Gelenkachse 34 schwenkbar an den Längsholmen 11'' des Drehgestells 11 gelagert sein. In diesem Falle übernimmt die Gelenkachse 34 die Funktion der Gelenkachse 32, und das Widerlagerstück kann jene in Fig. 4 in gestrichelten Linien veranschaulichte Ausbildung 21' erhalten, bei der das rückwärtige Ende der z. B. als Kastenrohrholm ausgebildeten Zug- und Lenkdeichsel 5 nicht nur längsverschieblich, sondern auch vertikal verschwenkbar geführt ist.

Das Widerlagerstück 21 bzw. 21' kann mitsamt seinen die Deichselhochachse 24 definierenden Lagerteilen 22, 23 in der Längsmittelebene 16 des Chassis 14 in und entgegen Fahrtrichtung verstellbar am Chassis festgelegt sein, um den Abstand 25 vergrößern oder verkleinern zu können. Auch die Gelenkverbindung 26 zwischen dem Drehgestell 11 und der Zug- und Lenkdeichsel 5 kann ein in der Geradeausfahrtstellung des Drehgestells 11 in und entgegen Fahrtrichtung in der Längsmittelebene 16 des Chassis 14 verstellbar mit dem Drehgestell 11 verbundenes Bauteil bilden, um den Abstand 29 bzw. 30 verändern zu können. Eine konstruktive Möglichkeit hierzu besteht darin, die Querholme 11' verschieblich mit den Längsholmen 11'' des Drehgestells 11 zu verbinden. Dies ist auch möglich, wenn die Querholme 11'' zugleich um die Gelenkachse 34 schwenkbar von den Längsholmen 11'' abgestützt werden.

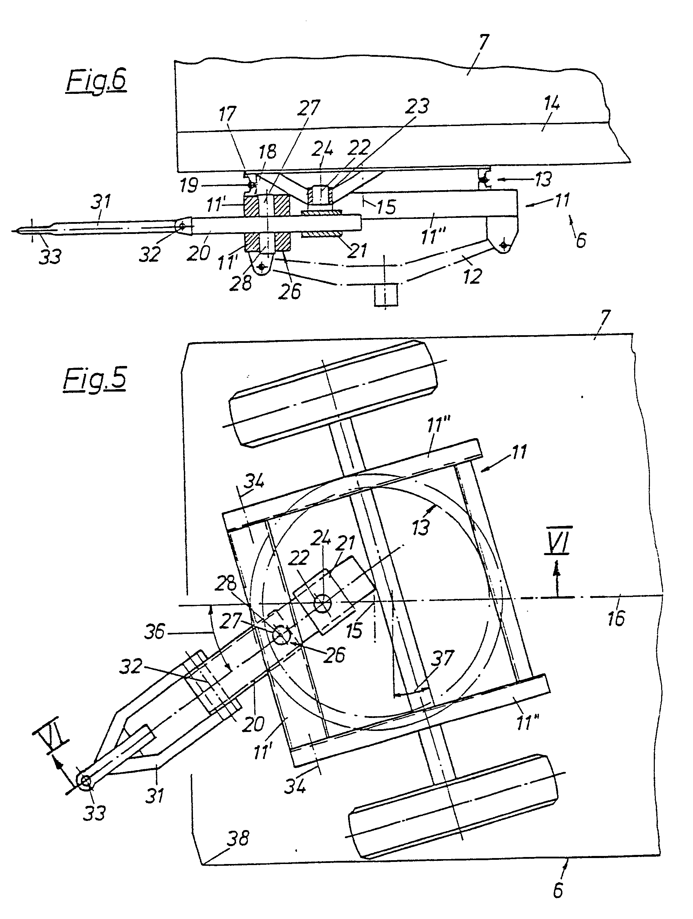

Die Zug- und Lenkdeichsel 5 hat eine Länge, die bei Geradeausfahrt eines aus Zug- und aus Anhängefahrzeug 2,6 gebildeten Lastzuges zwischen dem rückwärtigen Ende des Aufbaus 1 des Zugfahrzeugs 2 und dem vorderen Ende des Aufbaus 7 des Anhängefahrzeugs 6 einen Abstand 35 beläßt, der z. B. 70 oder 80 cm beträgt. Bei Durchfahren einer Kurve z. B. gemäß Fig. 2 gelangen die Teile des Anhängefahrzeugs in die in Fig. 5 beispielsweise veranschaulichte Stellung, wobei die Zug- und Lenkdeichsel 5 unmittelbar selbst ein Untersetzungsgetriebe bildet, daß die Lenkbewegungen der Zug- und Lenkdeichsel 5 in proportional untersetzte Schwenkbewegungen des Drehgestells 11 umwandelt. Wie der Fig. 5 entnommen werden kann, hat die Zug- und Lenkdeichsel 5 eine Schwenkbewegung um die Deichselhochachse 24 ausgeführt, deren Ausschlagwinkel bei 36 angedeutet ist. Dabei hat die Zug- und Lenkdeichsel dem Drehgestell 11 eine Schwenkbewegung um die Drehkranzhochachse 15 erteilt, deren Ausschlagwinkel bei 37 angedeutet ist und nur einen Bruchteil des Ausschlagwinkels 36 der Zug- und Lenkdeichsel 5 beträgt. Das Untersetzungsverhältnis zwischen Lenkbewegungen der Zug- und Lenkdeichsel 5 und den Schwenkbewegungen des Drehgestells 11 hängt von den jeweils gegebenen Abständen 25, 29 bzw. 30 zwischen den Drehachsen 15, 24, 28 ab und beträgt z. B. 2 :1. Das Untersetzungsverhältnis ist angesichts eines gewählten Aufbauabstands 35 und der Breite des Aufbaus 7 so zu gestalten, daß der kurveninnere vordere Eckpunkt 38 des Aufbaus 7 des Anhängefahrzeugs 6 berührungsfrei die Rückseite des Aufbaus 1 des Zugfahrzeugs 2 passieren kann.

Wird durch Lenkkräfte an der Zugöse 33 der Zug- und Lenkdeichsel 5 diese aus ihrer Geradeausfahrtstellung gemäß Fig. 3 um ihre Deichselhochachse 24 verschwenkt, so nimmt sie nicht nur über die Gelenkverbindung 26 das Drehgestell 11 in einer Schwenkbewegung um die Drehkranzhochachse 15 mit, sondern sie verschiebt sich auch in ihrer Längsrichtung im Widerlagerstück 21, so daß die eintretende Veränderung des Abstandes 29 ausgeglichen wird.

Anstelle der wegen ihrer Einfachheit besonders bevorzugten Ausführung gemäß dem Ausführungsbeispiel kann auch irgendein anderes geeignetes Untersetzungsgetriebe vorgesehen sein, das Lenkbewegungen der Zug- und Lenkdeichsel um deren Deichselhochachse in proportional untersetzte Schwenkbewegungen des Drehgestells 11 um die Drehkranzhochachse umwandelt. Untersetzungsgetriebe anderer Art, gleichgültig ob sie aus besonderen Lenkersystemen oder aus Zahnradpaarungen oder aus Kombinationen hieraus bestehen, gehen jedoch mit einem höheren Bauaufwand einher.

## Patentansprüche

1. Anhängefahrzeug, insbesondere für Lastkraftwagen, mit einem eine vordere Radachse (8) abstützenden Drehgestell (11), das mittels eines Drehkranzes (13) am Chassis (14) um eine in der vertikalen Längsmittelebene (16) des Chassis (14) angeordnete ortsfeste Drehkranzhochachse (15) schwenkbar gelagert ist, mit einer Zug- und Lenkdeichsel (5), die um eine in der vertikalen Längsmittelebene (16) des Chassis (14) vor der Drehkranzhochachse (15) gelegene ortsfeste Deichselhochachse (24) schwenkbar ist, und mit einem vor der Drehkranzhochachse (15) angeordneten Untersetzungsgetriebe, mittels dem Lenkbewegungen der Zug- und Lenkdeichsel (5) um die Deichselhochachse (26) in proportional untersetzte Schwenkbewegungen des Drehgestells (11) um die Drehkranzhochachse (15) umwandelbar sind, wobei die Zug- und Lenkdeichsel (5) einen Hebel des Untersetzungsgetriebes bildet, dadurch gekennzeichnet, daß die Zug- und Lenkdeichsel (5) im Bereich ihres rückwärtigen Endes in einem am Chassis (14) im Abstand (25) vor der Drehkranzhochachse (15) schwenkbar festgelegten, die Deichselhochachse (24) definierenden Widerlagerstück (21) längsverschieblich abgestützt ist und am Drehgestell (11) mittels einer Gelenkverbindung (26) angreift, die eine in der Geradeausfahrtstellung des Drehgestells mit der Längsmittelebene (16) des Chassis zusammenfallende und im Abstand (29) vor der Deichselhochachse (24) gelegene, zu dieser parallele Gelenkachse (28) aufweist.

2. Anhängefahrzeug nach Anspruch 1, dadurch gekennzeichnet, daß der mit der Kupplung eines Zugfahrzeugs (2) verbindbare vordere Teil (31) der Zug- und Lenkdeichsel (5) in an sich bekannter Weise um eine horizontale Gelenkachse schwenkbar mit dem am Drehgestell (11) angreifenden rückwärtigen Deichselteil (20) verbunden ist.

3. Anhängefahrzeug nach Anspruch 1, dadurch gekennzeichnet, daß die Zug- und Lenkdeichsel (5) ein über ihre gesamte Länge in sich starres Bauteil bildet, die Gelenkverbindung (26) mit dem Drehgestell (11) als Kreuzgelenk ausgebildet ist und das rückwärtige Ende der Zug- und Lenkdeichsel im Widerlagerstück (21') sowohl längsverschieblich als auch vertikal verschwenkbar geführt ist.

4. Anhängefahrzeug nach einem der Ansprüche 1 bis 3, dadurch gekennzeichnet, daß das Widerlagerstück (21; 21') mitsamt seinen die Deichselhochachse (24) definierenden Lagerteilen (22, 23) in der Längsmittelebene (16) des Chassis (14) in und entgegen Fahrtrichtung verstellbar am Chassis festgelegt ist.

5. Anhängefahrzeug nach einem oder mehreren der Ansprüch 1 bis 4, dadurch gekennzeichnet, daß die Gelenkverbindung (26) zwischen dem Drehgestell (11) und der Zug- und Lenkdeichsel (5) ein in der Geradeausfahrtstellung des Drehgestells in und entgegen Fahrtrichtung in der Längsmittelebene (16) des Chassis (14) verstellbar mit dem Drehgestell verbundendes Bauteil bildet.

## Claims

1. A towed vehicle, particularly for lorries, having a pivot mounting (11) which supports a front wheel axle (8) and which is mounted by means of a slewing ring (13) on the chassis (14), for pivoting about a stationary vertical axis (15) of the slewing ring situated in the vertical longitudinal central plane (16) of the chassis (14), having a towbar and steering bar (5) which is pivotable about a stationary axis (24) of the towbar situated in the vertical longitudinal central plane (16) of the chassis (14) in front of the vertical axis (15) of the slewing ring, and having a reduction gear which is disposed in front of the vertical axis (15) of the slewing ring and by means of which the steering movements of the towbar and steering bar (5) about the vertical axis (26) of the towbar can be converted into proportionally reduced pivotal movements of the pivot mounting (11) about the vertical axis (15) of the slewing ring, the towbar and steering bar (5) forming a lever of the reduction gear, characterised in that, in the region of its rear end, the towbar and steering bar (5) is supported for longitudinal displacement in a support member (2) pivotally located on the chassis (14) with spacing (25) in front of the vertical axis (15) of the slewing ring and defining the vertical axis (24) of the towbar, and acts on the pivot mounting (11) by means of a swivel connection (26) which has a pivotal axis (28) which, in the position of the pivot mounting for travel straight ahead, coincides with the longitudinal central plane (16) of the chassis and is situated, with spacing (29) in front of the vertical axis (24) of the towbar, parallel to this axis.

2. A towed vehicle according to claim 1, characterised in that the front portion (31) of the towbar and steering bar (5), which can be connected to the coupling of a towing vehicle (2), is connected, in a manner known per se, to the rear portion (20) of the towbar acting on the pivot mounting (11), for pivoting about a horizontal pivotal axis.

3. A towed vehicle according to claim 1, characterised in that the towbar and steering bar (5), forms a rigid component over its whole length, the swivel connection (26) to the pivot mounting (11) is constructed in the form of universal joint and the rear end of the towbar and steering bar is guided in the support member (21') both for longitudinal displacement and for vertical pivoting.

4. A towed vehicle according to any one of the claims 1 to 3, characterised in that the support member (21, 21'), together with its bearing members (22, 23) defining the vertical axis (24) of the towbar, is located in the central longitudinal plane (16) of the chassis (14) and is adjustable, on the chassis, in and counter to the direction of travel.

5. A towed vehicle according to any one or more of claims 1 to 4, characterised in that the swivel connection (26) between the pivot mounting (11) and the towbar and steering bar (5) forms a component which is connected to the pivot mounting for adjustment in the longitudinal central plane (16) of the chassis (14), in and counter to the direction of travel, in the position of the pivot mounting for travel straight ahead.

**Revendications**

1. Remorque, en particulier pour camion comprenant un cadre tournant (11) qui porte un essieu avant (8) et qui est monté à pivot au moyen d'une couronne de rotation (13) sur le châssis (14) autour d'un axe vertical de la couronne de rotation monté fixe dans le plan longitudinal médian vertical (16) du châssis (14), comprenant un timon d'attelage et de direction (5) qui peut pivoter autour d'un axe vertical de timon (24) monté fixe dans le plan longitudinal médian vertical (16) du châssis devant l'axe vertical (15) de la couronne de rotation, et comprenant un mécanisme démultiplicateur disposé devant l'axe vertical (15) de la couronne de rotation, au moyen duquel les mouvements de direction du timon d'attelage et de direction (5) autour de l'axe vertical (26) du timon peuvent être convertis en des mouvements de pivotement proportionnellement démultipliés du cadre tournant (11) autour de l'axe vertical (15) de la couronne de rotation, le timon d'attelage et de direction (5) constituant un levier du mécanisme de démultiplication, caractérisée en ce que le timon d'attelage et de direction (5) est supporté à coulissement longitudinal dans la zone de son extrémité postérieure, dans un contre-palier (21) fixé à pivot au châssis (14) à une certaine distance (25) devant l'axe vertical (15) de la couronne de rotation et définissant l'axe vertical (24) du timon et est en prise avec le cadre tournant (11) au moyen d'une articulation (26) qui présente un axe d'articulation (28) qui coïncide, dans la position d'orientation en ligne droite du cadre tournant, avec le plan longitudinal médian (16) du châssis, est situé à une distance (29) devant l'axe vertical (24) du timon et est parallèle à celui-ci.

2. Remorque suivant la revendication 1, caractérisée en ce que la partie antérieure (31) du timon d'attelage et de direction (5) pouvant être attachée à l'organe d'attelage d'un véhicule tracteur (2) est reliée d'une manière bien connue afin de pouvoir pivoter autour d'un axe d'articulation horizontal, à la partie postérieure (20) du timon agissant sur le cadre tournant (11).

3. Remorque suivant la revendication 1, caractérisée en ce que le timon de traction et de direction (5) forme un élément en lui-même rigide sur toute sa longueur, l'articulation (26) au cadre tournant (11) a la forme d'une articulation de cardan et l'extrémité postérieure du timon d'attelage et de direction est guidée dans le contre-palier (21') de manière à pouvoir coulisser longitudinalement et pivoter verticalement.

4. Remorque suivant l'une quelconque des revendications 1 à 3, caractérisée en ce que le contre-palier (21, 21') est fixé au châssis, avec ses pièces de montage (22, 23) définissant l'axe vertical (24) du timon, de façon réglable dans le sens du déplacement de la remorque et dans le sens opposé dans le plan longitudinal médian (16) du châssis (14).

5. Remorque suivant l'une quelconque des revendications 1 à 4, caractérisée en ce que l'articulation (26) entre le cadre tournant (11) et le timon d'attelage et de direction (5) forme un élément relié au cadre tournant de façon réglable dans la position d'orientation en ligne droite du cadre tournant, dans le sens du déplacement de la remorque et dans le sens opposé dans le plan longitudinal médian (16) du châssis (14).

Fig.1

Fig.2

0 1 2 2 5 2 7

Fig.4

Fig 3

2

_Fig.6_

_Fig.5_